# EUROPÄISCHE PATENTSCHRIFT

(11) **EP 3 247 506 B1**
(45) Veröffentlichungstag und Bekanntmachung des Hinweises auf die Patenterteilung: **05.06.2019**
(21) Anmeldenummer: 16700983.6
(22) Anmeldetag: 18.01.2016
(51) Int. Cl.: B29B 13/02, B27N 1/00, B05C 11/10

(54) **VORRICHTUNG UND VERFAHREN ZUR KONDITIONIERUNG VON LEIM**
DEVICE AND METHOD FOR CONDITIONING GLUE
DISPOSITIF ET PROCÉDÉ DE CONDITIONNEMENT DE COLLE

(30) Priorität: 19.01.2015 DE 102015100667
(43) Veröffentlichungstag der Anmeldung: 29.11.2017
(73) Patentinhaber: Dieffenbacher GmbH Maschinen- und Anlagenbau, 75031 Eppingen (DE)
(72) Erfinder: SCRIBA, Jörg, 75031 Eppingen (DE); GERHARDT, Markus, 75031 Eppingen (DE); VON HAAS, Gernot, 75031 Eppingen (DE)
(74) Vertreter: Hartdegen, Helmut
(86) Internationale Anmeldenummer: PCT/EP2016/050928
(87) Internationale Veröffentlichungsnummer: WO 2016/116413

(56) Entgegenhaltungen:
- WO-A1-2014/078767
- DE-A1-102008 059 877
- DE-A1-102009 006 704
- DE-A1-102011 007 336
- DE-A1-102011 077 514
- DE-A1-102013 104 653

## Beschreibung

Die Erfindung betrifft eine Vorrichtung zur Konditionierung von Leim für die nachfolgende Verwendung, wobei die Vorrichtung eine Dispergiereinheit für den Leim enthält, nach dem Oberbegriff des Patentanspruches 1. Weiter betrifft die Erfindung ein Verfahren zur Konditionierung von Leim für die nachfolgende Verwendung nach dem Oberbegriff des Patentanspruches 9.

Die Vorrichtung und das Verfahren sollen insbesondere im Zuge der Fertigung von Werkstoffplatten aus lose gestreutem, besonders bevorzugt aus lignosem, Material verwendet werden. Hierbei ist besonders bevorzugt die Versprühung des Leimes in Ein- oder Mehrstoffdüsen vorgesehen. Aber auch die Beleimung von Einzelteilen zur Herstellung von Produkten oder Maschinenelementen, insbesondere die flächige Beleimung von Holz oder Furnieren, im Zuge der Herstellung von Sperrholzplatten, Tragwerken, Leimbindern oder dergleichen ist vorgesehen.

Unter Platten aus lignosem Material werden insbesondere Holzwerkstoffplatten verstanden, insbesondere Faserplatten, wie z.B. MDF-, HDF- oder LDF-Platten als auch USB-Platten etc. Bei deren Herstellung werden Holzspäne oder vergleichbare lignose Partikel geleimt, worunter üblicherweise das Besprühen mit einem Leim bzw. einem Bindemittel verstanden wird, bei denen es sich z.B. um Isocyanate, Melaminharnstoffformaldehydharze, Harnstoffformaldehydharze, Urea-Formaldehydharze, Melaminharze, Phenolharze oder andere Harze, z.B. auf Basis von Polyaminen oder Taninen handeln kann.

Aus DE 10 2013 104 653 A1, DE 10 2011 077 514 A1 oder DE 10 2009 006 704 A1 sind Verfahren und Vorrichtungen bekannt geworden, in denen vereinzelte Partikel mit Leim besprüht und beleimt werden. Aus DE 10 2011 007 336 A1 und DE 10 2008 059 877 A1 sind Düsen bekannt geworden, mit denen in diesen genannten Vorrichtungen Leim versprüht werden kann. Die derart beleimten Partikel werden dann in eine Streugutmatte eingebracht, die anschließend in einer Presse unter Anwendung von Druck und Wärme zu einer entsprechenden Platte aus lignosem Material verpresst wird. Bei diesen Pressen handelt es sich entweder um getaktet arbeitende Ein- oder Mehretagenpressen oder aber auch um kontinuierlich arbeitende Pressen.

Der Beleimung der Fasern kommt im Rahmen der Herstellung solcher Platten eine besondere Bedeutung zu, denn die Eigenschaften der hergestellten Platte, z.B. deren Querzugfestigkeit, hängen entscheidend von dem eingesetzten Leim ab.

Problematisch ist bei der Beleimung aber auch, wenn sich innerhalb des Leims Agglomerate bilden, die in einer Streugutmatte und anschließend in einer gepressten Platte zu Leimnestern respektive Leimklumpen führen. Durch diese können sich innerhalb einer Platte punktuell verhärtete Stellen bilden, die dann bei einer Be- oder Verarbeitung von Platten zu Schwierigkeiten führen. Außerdem können derartige Leimagglomerate auch zu unerwünschten Ungleichmäßigkeiten an der Oberfläche der Platten führen, wodurch auch deren optisches Erscheinungsbild negativ beeinflusst wird. Insbesondere bei der Dünnplattenfertigung kann es zu Dichteerhöhungen in der Fertigung kommen, die zu Schäden an den Pressplatten oder Stahlbändern der Pressen führen können.

Aber auch die Herstellung von belastungsfähigen Leimverbindungen benötigt einen optimal konditionierten Leim und vor allem dessen optimale Aufbringung auf die Leimflächen, beispielsweise bei der Herstellung von Leimbindern.

Um dieses Problem zu umgehen, ist es bekannt, Dispergiereinheiten in die Leimzuführung zu setzen, die das Aufbrechen entsprechender Agglomerate im Leim bewirken.

Es hat sich jetzt aber herausgestellt, dass trotz im Wesentlichen gleicher Einstellungen von Drehzahl oder Leistung eines Dispergierers der über diesen geleitete Leim nicht immer die gewünschte Konsistenz hat und diese auch nicht immer reproduzierbar erreicht werden kann. Dies wird aber in der Industrie oder im Handwerk benötigt um reproduzierbare und vergleichbare Ergebnisse, insbesondere in der großindustriellen Anwendung, zu erhalten. Auch kann es vorkommen, dass die gelieferte Leimflotte minimalen Schwankungen in ihren Bestandteilen respektive ihrer Zusammensetzung aufweist. Auch die Mischungsverhältnisse in einer Leimküche schwanken aufgrund der verwendeten Vorrichtungen, die Lagerung oder die Transportwege, welche im Ergebnis zu Viskositätsschwankungen führen können.

Besonders nachteilig sind Viskositätsschwankungen durch ihre Eigenschaft differenzierte Leimverbräuche zu verursachen. Dabei ergibt eine Unterdosierung üblicherweise Ausschuss und eine Überdosierung Verschwendung teuren Leimes.

Aufgabe der vorliegenden Erfindung ist es daher, eine Vorrichtung und ein Verfahren der genannten Art dahingehend weiterzuentwickeln, dass eine gewünschte Leimkonsistenz dauerhaft gewährleistet werden kann. Eine erweiterte Aufgabe ist es eine Vorrichtung und ein Verfahren zur Konditionierung von Leim zu schaffen, die es ermöglicht, Produktionsunterbrechungen abzufangen und für den Anfahrbetrieb einer Produktion rechtzeitig optimal konditionierten Leim bereitzustellen.

Diese Aufgabe für die Vorrichtung wird erfindungsgemäß dadurch gelöst, dass auf dem Weg des Leimes durch die Konditioniervorrichtung die Dispergiereinheit mit einem Wärmetauscher zur Einstellung der Temperatur des Leimes in Abhängigkeit von der vorgegebenen Viskosität in Reihe geschaltet ist.

Der Erfindung liegt die Erkenntnis zugrunde, dass mit der Dispergiereinheit über Scherarbeit bei der Zerkleinerung von Agglomeraten im Leim Energie in den Leim eingetragen wird, wodurch sich der Leim entsprechend erwärmt.

Da bei Leim dessen Viskosität aber zu einem großen Teil temperaturabhängig ist, ändert sich aufgrund dieses Energieeintrages und der damit verbunden Temperaturänderung des Leimes dessen Viskosität in erheblichem Maße. Indem der Leim erfindungsgemäß über einen entsprechenden Wärmetauscher geführt wird, wo dem Leim wieder Energie entzogen wird, kann der Leim wieder auf die gewünschte Temperatur abgekühlt werden, so dass er die für eine Weiterverarbeitung gewünschte richtige Viskosität hat.

Es ist aber auch im Rahmen der Erfindung, wenn der Wärmetauscher, der mit der Dispergiereinheit in Reihe geschaltet ist, der Dispergiereinheit nicht nach- sondern vorgeschaltet ist. Auf diese Weise wird dem Leim zunächst über den Wärmetauscher Energie entzogen und erst anschließend in der Dispergiereinheit wird dem Leim wieder so viel Energie zugeführt, dass er bei Verlassen der Dispergiereinheit die gewünschte Temperatur und damit die gewünschte Viskosität aufweist.

Weiterhin ist es im Rahmen der Erfindung, wenn bei einem Wärmetauscher, unabhängig davon, ob dieser vor oder nach der Dispergiereinheit angeordnet ist, der Leim gekühlt wird, um Energie abzuführen, oder aber erwärmt wird, um weitere Energie zuzuführen. Wesentlich ist, dass der Leim am Ende nach Durchlaufen von Dispergiereinheit und vor- oder nachgeschaltetem Wärmetauscher die korrekte Viskosität für die Verwendung aufweist.

Bei einer besonders bevorzugten Ausführungsform der Erfindung ist dabei ein entsprechendes Viskosimeter vorgesehen, mit dem die Viskosität des Leimes direkt ermittelt wird. Da die Daten, die mit dem Viskosimeter erfasst werden, unmittelbar für die Steuerung bzw. Regelung der Vorrichtung zu nutzen sein sollen, handelt es sich bei dem Viskosimeter insbesondere um ein sogenanntes Online-Viskosimeter.

Es ist dabei bekannt, dass die Viskosität ein Maß für die Homogenität einer Leimsuspension ist, d.h. dass mit besserer Homogenität die Viskosität üblicherweise steigt. Jetzt hat allerdings auch die Temperatur einen wesentlichen Einfluss, so dass beim Viskosimeter auch diese erfasst wird, um so eine Temperaturkompensation für den vom Viskosimeter gelieferten Messwert ermöglichen zu können.

Grundsätzlich können bei einer Weiterbildung der Erfindung Daten, wie die Messergebnisse des Viskosimeters oder aber auch die Energiemengen, die über die Dispergiereinheit in den Leim eingebracht werden oder aber die über den Wärmetauscher in den Leim eingebracht oder aus diesem ausgetragen werden, die Temperatur etc. in einer Auswerteeinheit zusammengeführt werden, um damit entsprechende Regelungen oder Steuerungen durchzuführen. Hierbei kann insbesondere die mittels Dispergiereinheit oder mittels Wärmetauscher in den Leim einzubringenden oder auszutragenden Energiemenge bestimmt werden.

Bei der Weiterbildung der Erfindung ist es vorgesehen, in den Förderweg des Leims einen Pufferspeicher zu integrieren. Alternativ oder in Kombination kann dabei anteilig oder vollständig die Menge des über die Dispergiereinheit und den Wärmetauscher geleiteten Leims mittels einer separaten Pumpe gefördert werden.

Die genannte Pumpe ist dabei insbesondere regelbar, um sie an zu verarbeitende Leimmengen und an eine sich ändernde Viskosität des Leimes anpassen zu können.

Vorzugsweise hat die Pumpe dabei ein maximal mögliches Pumpvolumen, das über dem Volumen liegt, das über die Konditioniervorrichtung fließen soll. Damit ist es möglich, Leim vor seiner Abgabe an nachgeschaltete Anlagenteile mehrmals über die Vorrichtung zur Konditionierung zu leiten.

Der genannte Pufferspeicher kann dann insbesondere beim Anfahren einer entsprechenden Anlage den Vorteil haben, dass an den eigentlichen Leimdüsen, mit denen der Leim dann letztlich dem lignösem Material zugemischt wird, bereits zu Beginn des Anfahrprozesses richtig konditionierter Leim zur Verfügung steht. Damit ist auch die Menge an Ausschuss zu reduzieren, die beim Anfahren einer Anlage oder Verwendung, insbesondere im Zuge der Herstellung von Werkstoffplatten etc., sonst anfallen kann.

Außerdem ist in dem Pufferspeicher bevorzugt ein gleichmäßiger Druck konstant vorgegeben, wodurch in der nachgeschalteten Anlage Regelungen für sich ändernde Zugangsparameter eingespart werden können.

Die Lösung der Aufgabe für ein Verfahren besteht im Wesentlichen darin, dass der Leim über zumindest eine Zuleitung einer Dispergiereinheit zugeführt wird, in der Dispergiereinheit dispergiert wird und der Leim in einer Leitung zur weiteren Verwendung transportiert wird, wobei währenddessen mit wenigstens einem Wärmetauscher die Temperatur des Leimes in Abhängigkeit von der vorgegebenen Viskosität eingestellt wird.

Im Sinne der Erfindung kann es dabei auch sein, dass während oder für die Konditionierung mittels der einzelnen Teile in der Vorrichtung unterschiedliche Viskositäten eingestellt werden. Es kann beispielsweise sein, dass für die Dispergiereinheit bewusst eine niedrige oder hohe Viskosität eingestellt wird um das Dispergierergebnis (in Abhängigkeit des verwendeten Leimes) zu verbessern. Anschließend kann in der Ausgabe oder in der Leitung zur bestimmungsgemäßen Verwendung (Verbraucher) ein weiterer Wärmetauscher eine andere Viskosität einstellen, die die Verwendung verbessert. Beispielsweise eine optimale Viskosität für das Versprühen oder einen flächigen Leimauftrag.

Im Zuge dessen kann natürlich auch vorgesehen sein, dass die vorgeschlagene Vorrichtung in einer Dispergiereinheit komprimiert enthalten ist und bereits die Dispergiereinheit selbst vorgesehen ist, die Einstellung der Viskosität respektive der Temperatur vor und/oder nach der Dispergierung vorzunehmen.

In diesem Zusammenhang ist es sinnvoll, dass der Wärmetauscher in Abhängigkeit von Temperatur und Viskosität des Leimes geregelt wird.

Bevorzugt ist nach dem Verfahren und wie bereits in der Vorrichtung beschrieben, dass der Leim die Dispergiereinheit und den Wärmetauscher mehrmals durchläuft.

Dabei kann es besonders vorteilhaft sein, dass bei einer Zirkulation der Leim nach der Dispergiereinheit in einen Pufferspeicher geführt wird, und vorzugsweise die Zirkulation eine höhere Durchlaufleistung als das Nettodurchsatzvolumen des Verfahrens aufweist.

In einer weiteren vorteilhaften Ausführungsform wird mittels eines Viskosimeter und einer Auswerteeinheit die Dispergiereinheit, zumindest ein Wärmetauscher und/oder die Pumpe gesteuert oder geregelt.

In einer weiteren alternativen oder in Kombination angewandten Durchführung kann über ein Viskosimeter mit zugeordnetem Temperaturfühler eine Temperaturkompensation des vom Viskosimeter gelieferten Messwertes mittels zumindest eines Wärmetauschers durchgeführt werden.

Das Verfahren und die Vorrichtung sind unabhängig voneinander betreibbar, können aber bevorzugt gemeinsam verwirklicht werden.

Weitere Vorteile und Merkmale der Erfindung ergeben sich aus der nachfolgenden Beschreibung von Ausführungsbeispielen. Dabei zeigt:
Fig. 1 das Schaltschema einer Konditioniervorrichtung für Leim;
Fig. 2 das Schaltschema alternativer Ausführungsformen für eine Konditioniervorrichtung für Leim.

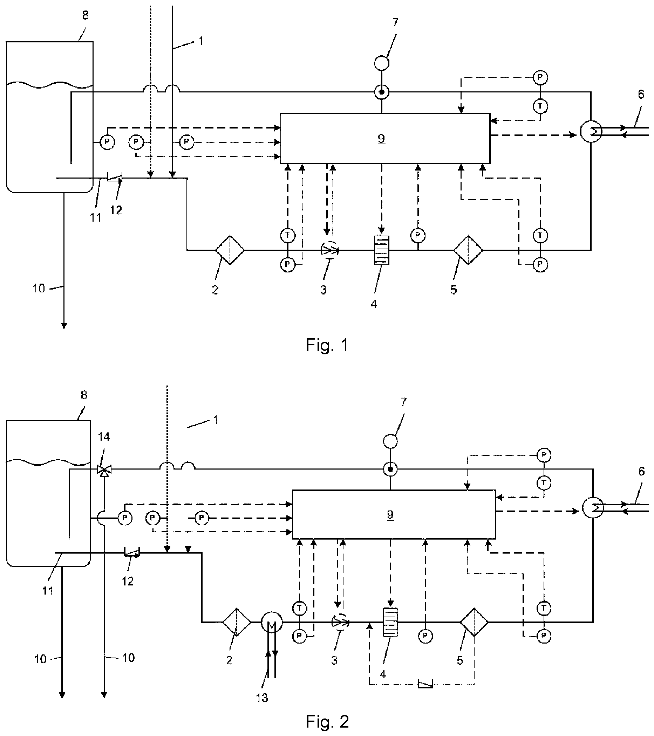

In Fig. 1 erkennt man das Schaltschema einer Vorrichtung zur Konditionierung von Leim, der für die Fertigung von Platten aus lignosem Material verwendet werden könnte. Über eine oder mehrere Zuleitungen 1 wird Leim oder aber verschiedene Leime bzw. unter Umständen auch entsprechend in ihren Anteilen entsprechende Teile einer Leimflotte in die Konditioniervorrichtung eingeführt. Dieser Leim fließt dann zunächst über einen Filter 2 in dem grobe Partikel abgefiltert werden. Dieser Filter 2 kann auch in hier nicht dargestellter Weise ein Doppelfilter sein, wodurch die Möglichkeit besteht, einen Filter zur Wartung außer Betrieb zu nehmen, während dabei der andere Filter die vollständige Filterung des Leimes allein übernimmt.

Mittels einer Pumpe 3, die dem Filter 2 nachgeschaltet ist, wird der Leim dann über eine Dispergiereinheit 4 geleitet. Bei dieser Pumpe handelt es sich beispielsweise um eine Exzenter-Schneckenpumpe oder eine Zahnradpumpe. Aber auch andere Pumpenbauformen sind möglich.

In der der Pumpe 3 nachgeschalteten Dispergiereinheit 4 werden z.B. über rotierende Rotor- und Stator-Elemente im Leim verbleibende Agglomerate aufgebrochen und zerschlagen. Sollten über die Zuleitungen 1 unterschiedliche Komponenten für einen Leim zugeführt werden, werden diese in der Dispergiereinheit 4 auch miteinander vermischt.

Über die sich gegeneinander bewegenden Bauteile der Dispergiereinheit 4 wird aufgrund der durch diese geleisteten Scherarbeit in den Leim Energie eingetragen, was zu einer Temperaturerhöhung des Leimes führt.

Da eine derartige Temperaturerhöhung aber zu einer deutlichen Veränderung der Viskosität des Leimes führt, die wiederum für die spätere Verwendung des Leimes von Relevanz ist, wird der Leim in der hier dargestellten Vorrichtung, nachdem er noch über einen Feinfilter 5 geführt worden ist, über einen Wärmetauscher 6 geleitet. Hier wird dem Leim wieder Energie entzogen, so dass seine Temperatur sinkt und damit auch seine Viskosität.

In einem bei dem hier dargestellten Beispiel dem Wärmetauscher 6 nachgeschalteten Viskosimeter 7 wird die sich ergebene Viskosität des Leimes kontinuierlich gemessen, bevor der Leim dann in einen Zwischenspeicher 8 eingeleitet wird.

Die Viskosität des Leimes ist ein wesentliches Maß für seine Homogenität. Mit besserer Homogenität steigt sie an.

Die Daten, die vom Viskosimeter 7 ermittelt werden, werden bei der hier dargestellten Ausführungsform an eine Auswerteeinheit 9 weitergeleitet. Da die Temperatur auch einen wesentlichen Einfluss auf die Viskosität hat, wird auch diese Größe ständig gemessen, insbesondere auch um bzgl. der Viskositätsmessung ggf. eine Temperaturkompensation durchführen zu können.

Unter diesem Aspekt werden auch die Daten von verschiedenen Druckfühlern (P) und Temperaturfühlern (T) der Auswerteeinheit 9 zugeleitet. Diese ist mit einem Programm versehen, über das sowohl die Leistung der Pumpe 3 sowie die Drehzahl oder die Leistung der Dispergiereinheit 4 gesteuert werden kann als auch die am Wärmetauscher 6 aus dem Leim auszutragende Wärmemenge. Entsprechende oder notwendige weitere Steuer- und/oder Regelmechanismen wird der Fachmann aufgrund seiner Ausbildung und praktischen Erfahrung ergreifen um die Vorrichtung oder das Verfahren zur Konditionierung von Leim erfolgversprechend zu modifizieren.

Dabei ist es wesentlich, dass am Wärmetauscher 6 ggf. auch Energie in dem Leim eingebracht werden kann, falls die am Viskosimeter 7 gemessene Viskosität nicht einen gewünschten Vorgabewert erreicht.

Der Leim, der dann die gewünschte Konsistenz hat, kann in einen Zwischenspeicher 8 geleitet, aus dem er über eine Leitung 10 entnommen wird, um in schon bisher bekannter Weise der hier nicht näher dargestellten und/oder beschriebenen Dosierlinie respektive einer Beleimungsvorrichtung einer Anlage zugeführt zu werden. Bevorzugt kann dies eine Anlage zur Herstellung von Spanplatten etc. sein. Der Zwischenspeicher 8 wird dabei vorzugsweise auf einem konstanten Druck gehalten, um für die nachfolgenden Bauelemente gleichbleibende Zuführbedingungen zu gewährleisten.

Bei der hier beschriebenen Vorrichtung ist die Pumpe 3 als eine Zirkulationspumpe vorzugsweise so eingestellt, dass ihr Fördervolumen etwas über dem Volumen an Leim liegt, das über die Zuleitung 1 zugeführt wird. Die sich ergebende Differenz wird gedeckt, indem im Zwischenspeicher 8 befindlicher Leim über eine Stichleitung 11 entnommen wird und dem aus der Zuleitung 1 kommenden Leim zugemischt wird. Dabei wird über ein Rückschlagventil 12 sichergestellt, dass der aus der Zuleitung 1 kommende Leim erst von der Pumpe 3 über die Dispergiereinheit 4 und den Wärmetauscher 6 geführt wird, bevor er in den Zwischenspeicher 8 gelangt.

Diese Verschaltung verhindert insbesondere, dass die hier beschriebene Konditioniereinheit in einen Leerlaufzustand verfällt. So wird ein aufwendigeres Regeln vermieden, das notwendig wäre, um aus einem derartigen Leerlaufprozess wieder in den normal zu steuernden Prozess überzugehen. Eine Leerlaufvermeidung kann mit entsprechender Programmierung der Auswerteeinheit 9 und insbesondere mit einem Füllstandsmesser im Zwischenspeicher 8 eingerichtet werden.

Außerdem kann so sichergestellt werden, dass Leim der den nachgeschalteten Anlageteilen zugeführt wird, die Konditionierstrecke mindestens einmal durchlaufen hat. Grundsätzlich kann die als Zirkulationspumpe arbeitende Pumpe 3 auch auf ein Fördervolumen eingestellt werden, das größer ist als das Volumen, das in den nachgeschalteten Anlageteilen benötigt wird. Somit kann Leim, der im Zwischenspeicher ist, ggf. auch mehrmals durch die hier beschriebene Konditioniervorrichtung gelaufen sein.

In der Fig. 2 ist eine weitere Ausgestaltung für eine Konditioniervorrichtung für Leim dargestellt. Diese entspricht im Wesentlichen der bereits anhand der Fig. 1 erläuterten Ausführungsform, so dass gleiche Teile mit gleichen Bezugszeichen versehen sind.

In dem in der Fig. 2 dargestellten Beispiel ist dabei zwischen dem Filter 2 und der Pumpe 3 noch ein weiterer Wärmetauscher 13 vorgesehen. Mit diesem ist es möglich, die aus der Zuleitung 1 zugeführten Leime so vorzutemperieren, dass sie von der Pumpe 3 optimal gefördert und anschließend in der Dispergiereinheit 4 effektiv bearbeitet werden können. Über den Wärmetauscher 13 kann dabei sowohl Energie in den Leimstrom eingebracht als auch aus diesem entzogen werden.

Grundsätzlich ist damit bei dieser Ausführungsform der Wärmetauscher 6 auch lediglich als fakultativ anzusehen, um mit diesem ggf. eine noch feinere Justage der Temperatur und damit der Viskosität des Leimes zu ermöglichen.

Des Weiteren ist in der Fig. 2 auch noch ein Umschaltventil 14 zu erkennen, das in der Leitung hinter dem Viskosimeter 7 integriert ist. Über dieses Umschaltventil 14 ist es möglich, konditionierten Leim unmittelbar in die Leitung 10 zu einer Dosierlinie zu leiten, ohne ihn im Zwischenspeicher 8 zwischen zu puffern. Dies kann auch sinnvoll sein, wenn im laufenden Betrieb der Zwischenspeicher gereinigt werden muss.

Bevorzugt kann der Feinfilter 5 als selbstreinigender Filter ausgeführt sein, der in vorgegebenen Abständen mechanisch den Filter abstreift. Dabei können die abgestreiften Grobteile wieder vor oder direkt in die Dispergiereinheit eingeführt werden, um diese nochmals zu dispergieren.

Die hier beschriebene Vorrichtung und das Verfahren haben insbesondere den Vorteil, dass mit ihr ein innerhalb einer Fertigung für Werkstoffplatten etc. benötigter Leim jeweils präzise und vor allem auch kontinuierlich konditioniert und damit in gleichbleibender Qualität für die Produktion, auch im Anfahrbetrieb, bereitgestellt werden kann.

### Stand der Technik:

DE 10 2008 059 877 A1
DE 10 2009 006 704 A1
DE 10 2011 007 336 A1
DE 10 2011 077 514 A1
DE 10 2013 104 653 A1

### Bezugszeichenliste

1 Zuleitung
2 Filter
3 Pumpe
4 Dispergiereinheit
5 Feinfilter
6 Wärmetauscher
7 Viskosimeter
8 Zwischenspeicher
9 Auswerteeinheit
10 Leitung
11 Stichleitung
12 Rückschlagventil
13 Wärmetauscher
14 Umschaltventil
P Druckfühler
T Temperaturfühler

## Patentansprüche

1. Vorrichtung zur Konditionierung von Leim mit zumindest einer Zuleitung (1), einer Leitung (10) zum Transport des konditionierten Leimes zur weiteren Verwendung und einer Dispergiereinheit (4), **dadurch gekennzeichnet, dass** die Dispergiereinheit (4) mit wenigstens einem Wärmetauscher (6, 13) zur Einstellung der Temperatur des Leimes in Abhängigkeit von der vorgegebenen Viskosität in Reihe geschaltet ist.

2. Vorrichtung gemäß Anspruch 1, **dadurch gekennzeichnet, dass** die Dispergiereinheit (4) mit einer Pumpe (3) in Reihe geschaltet ist. '

3. Vorrichtung gemäß Anspruch 2, **dadurch gekennzeichnet, dass** die Pumpe (3) regelbar ist.

4. Vorrichtung gemäß Anspruch 2, **dadurch gekennzeichnet, dass** der Pumpe (3) Leim aus einem, vorzugsweise vorgespannten, Pufferspeicher (8) zuführbar ist.

5. Vorrichtung gemäß Anspruch 4, **dadurch gekennzeichnet, dass** ein Kreislauf vorgesehen ist, in dem die zumindest eine Pumpe (3) in den Pufferspeicher (8) fördert und mit einer Förderleistung versehen ist, die höher ist als ein Nettodurchsatzvolumen der Vorrichtung.

6. Vorrichtung gemäß Anspruch 1 oder 2, **dadurch gekennzeichnet, dass** zumindest ein Viskosimeter (7) und eine Auswerteeinheit (9) angeordnet ist, die geeignet sind die Dispergiereinheit (4), den wenigstens einen Wärmetauscher (6, 13) und/oder die Pumpe (3) zu steuern oder zu regeln.

7. Vorrichtung gemäß Anspruch 6, **dadurch gekennzeichnet, dass** zumindest einem Viskosimeter (7) ein Temperaturfühler (T) zugeordnet ist zur Temperaturkompensation eines vom Viskosimeter gelieferten Messwertes mittels zumindest eines Wärmetauschers (6, 13).

8. Vorrichtung gemäß Anspruch 1, **dadurch gekennzeichnet, dass** als Wärmetauscher (6, 13) ein Plattenwärmetauscher oder bevorzugt ein Spiralwärmetauscher angeordnet ist.

9. Verfahren zur Konditionierung von Leim, wobei der Leim mit zumindest einer Zuleitung (1) einer Dispergiereinheit (4) zugeführt wird, in der Dispergiereinheit (4) dispergiert wird und der Leim in einer Leitung (10) zur weiteren Verwendung transportiert wird, **dadurch gekennzeichnet, dass** mit wenigstens einem Wärmetauscher (6, 13) die Temperatur des Leimes in Abhängigkeit von der vorgegebenen Viskosität eingestellt wird.

10. Verfahren nach Anspruch 9, **dadurch gekennzeichnet, dass** der Leim die Dispergiereinheit (4) und den Wärmetauscher (6,13) mehrmals durchläuft.

11. Verfahren nach Anspruch 9 oder 10, **dadurch gekennzeichnet, dass** der Wärmetauscher (6, 13) in Abhängigkeit von Temperatur und Viskosität des Leimes geregelt wird.

12. Verfahren nach Anspruch 10, **dadurch gekennzeichnet, dass** bei einer Zirkulation der Leim nach der Dispergiereinheit (4) in einen Pufferspeicher geführt wird, und vorzugsweise die Zirkulation eine höhere Durchlaufleistung als das Nettodurchsatzvolumen des Verfahrens aufweist.

13. Verfahren nach Anspruch 9 oder 10, **dadurch gekennzeichnet, dass** mittels eines Viskosimeter (7) und einer Auswerteeinheit (9) die Dispergiereinheit (3), zumindest ein Wärmetauscher (6, 13) und/oder die Pumpe (3) gesteuert oder geregelt wird.

14. Verfahren nach Anspruch 9 oder 10, **dadurch gekennzeichnet, dass** über ein Viskosimeter (7) mit zugeordnetem Temperaturfühler (T) eine Temperaturkompensation des vom Viskosimeter gelieferten Messwertes mittels zumindest eines Wärmetauschers (6, 13) durchgeführt wird.

15. Verfahren nach Anspruch 9 oder 10, **gekennzeichnet durch** den Betrieb einer Vorrichtung gemäß einem oder mehreren der Ansprüche 1 - 8.

## Claims

1. Device for conditioning glue, having at least one supply pipe (1), a pipe (10) for transporting the conditioned glue for further use and a dispersing unit (4), **characterized in that** the dispersing unit (4) is connected in series to at least one heat exchanger (6, 13) for setting the temperature of the glue depending on the predetermined viscosity.

2. Device according to claim 1, **characterized in that** the dispersing unit (4) is connected in series to a pump (3).

3. Device according to claim 2, **characterized in that** the pump (3) is controllable.

4. Device according to claim 2, **characterized in that** glue can be supplied to the pump (3) from a preferably preloaded buffer tank (8).

5. Device according to claim 4, **characterized in that** a circuit is provided in which the at least one pump (3) conveys into the buffer tank (8) and is provided with a delivery rate which is higher than a net throughput volume of the device.

6. Device according to claim 1 or 2, **characterized in that** at least one viscometer (7) and an evaluation unit (9) are arranged, which are adapted to control or regulate the dispersing unit (4), the at least one heat exchanger (6, 13) and/or the pump (3).

7. Device according to claim 6, **characterized in that** a temperature sensor (T) is assigned to at least one viscometer (7) for temperature compensation of a measured value supplied by the viscometer by means of at least one heat exchanger (6, 13).

8. Device according to claim 1, **characterized in that** a plate heat exchanger or preferably a spiral heat exchanger is arranged as heat exchanger (6, 13).

9. Method for conditioning glue, wherein the glue is fed to a dispersing unit (4) by at least one supply pipe (1), is dispersed in the dispersing unit (4) and the glue is transported in a pipe (10) for further use, **characterized in that** the temperature of the glue is set, depending on the predetermined viscosity, using at least one heat exchanger (6, 13).

10. Method according to claim 9, **characterized in that** the glue passes several times through the dispersing unit (4) and the heat exchanger (6, 13).

11. Method according to claim 9 or 10, **characterized in that** the heat exchanger (6, 13) is controlled depending on the temperature and viscosity of the glue.

12. Method according to claim 10, **characterized in that**, during a circulation, the glue is fed into a buffer tank after the dispersing unit (4), and preferably the circulation has a higher throughput rate than the net throughput volume of the method.

13. Method according to claim 9 or 10, **characterized in that** the dispersing unit (3), at least one heat exchanger (6, 13) and/or the pump (3) is controlled or regulated by means of a viscometer (7) and an evaluation unit (9).

14. Method according to claim 9 or 10, **characterized in that** a temperature compensation of the measured value supplied by the viscometer is carried out by means of at least one heat exchanger (6, 13) via a viscometer (7) with associated temperature sensor (T).

15. Method according to claim 9 or 10, **characterized by** the operation of a device according to one or more of claims 1-8.

## Revendications

1. Dispositif pour le conditionnement de colle avec au moins une conduite d'alimentation (1), une conduite (10) pour le transport de la colle conditionnée vers son utilisation et une unité de dispersion (4), **caractérisé en ce que** l'unité de dispersion (4) est monté en série avec au moins un échangeur de chaleur (6, 13) pour le réglage de la température de la colle en fonction de la viscosité prédéfinie.

2. Dispositif selon la revendication 1, **caractérisé en ce que** l'unité de dispersion (4) est montée en série avec une pompe (3).

3. Dispositif selon la revendication 2, **caractérisé en ce que** la pompe (3) peut être régulée.

4. Dispositif selon la revendication 2, **caractérisé en ce que** de la colle peut être amenée à la pompe (3) à partir d'un réservoir tampon (8), de préférence précontraint.

5. Dispositif selon la revendication 4, **caractérisé en ce qu'**il est prévu un circuit dans lequel au moins une pompe (3) pompe vers le réservoir tampon (8) et possède une capacité de refoulement supérieure au débit volumique net du dispositif.

6. Dispositif selon la revendication 1 ou 2, **caractérisé en ce que** sont prévus au moins un viscosimètre (7) et une unité d'analyse (9) qui conviennent pour réguler ou régler l'unité de dispersion (4), l'au moins un échangeur de chaleur (6, 13) et/ou la pompe (3).

7. Dispositif selon la revendication 6, **caractérisé en ce qu'**une sonde de température (T) est associée à au moins un viscosimètre (7) pour compenser la température avec une valeur de mesure fournie par le viscosimètre au moyen d'au moins un échangeur de chaleur (6, 13).

8. Dispositif selon la revendication 1, **caractérisé en ce que** l'échangeur de chaleur (6, 13) est de préférence un échangeur de chaleur à plaques ou un échangeur de chaleur spiralé.

9. Procédé pour le conditionnement de colle, dans lequel la colle est amenée par au moins une conduite d'alimentation (1) à une unité de dispersion (4), dispersée dans l'unité de dispersion (4) et transportée dans une conduite (10) pour être utilisée, **caractérisé en ce que** la température de la colle est ajustée avec au moins un échangeur de chaleur (6, 13) en fonction de la viscosité prédéfinie.

10. Procédé selon la revendication 9, **caractérisé en ce que** la colle passe plusieurs fois dans l'unité de dispersion (4) et l'échangeur de chaleur (6, 13).

11. Procédé selon la revendication 9 ou 10, **caractérisé en ce que** l'échangeur de chaleur (6, 13) est régulé en fonction de la température et de la viscosité de la colle.

12. Procédé selon la revendication 10, **caractérisé en ce qu'**après avoir circulé, la colle est amenée après l'unité de dispersion (4) dans un réservoir tampon et la circulation s'effectue de préférence à un débit de circulation plus élevé que le débit volumique net du procédé.

13. Procédé selon la revendication 9 ou 10, **caractérisé en ce que** l'unité de dispersion (3), au moins un échangeur de chaleur (6, 13) et/ou la pompe (3) sont commandés ou régulés au moyen d'un viscosimètre (7) et d'une unité d'analyse (9).

14. Procédé selon la revendication 9 ou 10, **caractérisé en ce qu'**un viscosimètre (7) auquel une sonde de température (T) est associée réalise une compensation de la température avec la valeur de mesure fournie par le viscosimètre au moyen d'au moins un échangeur de chaleur (6, 13).

15. Procédé selon la revendication 9 ou 10, **caractérisé en ce qu'**il utilise un dispositif selon une ou plusieurs des revendications 1 à 8.
